# EUROPEAN PATENT APPLICATION

(11) **EP 2 594 177 A1**
(43) Date of publication of application: **22.05.2013**
(21) Application number: 11189556.1
(22) Date of filing: 17.11.2011
(51) Int. Cl.: A47J 44/00

(54) **Appliance for preparing foodstuff**

(71) Applicant: Koninklijke Philips Electronics N.V., 5621 BA Eindhoven (NL)
(72) Inventor: Murbacher, Werner K., 5600 AE Eindhoven (NL); Zergoi-Wagner, Gerlinde, 5600 AE Eindhoven (NL)
(74) Representative: Damen, Daniel Martijn

(57) **Abstract**

An appliance (1) for preparing foodstuff comprises two units (2, 3) which are designed to be positioned in an operative, side-by-side configuration. A first unit is a cutting unit (2) equipped with means (22, 24) for cutting food ingredients, and a second unit is a cooking unit (3) equipped with means for heating food ingredients and means (34) for stirring food ingredients. The cooking unit (3) is in a position for receiving cut food ingredients from an outlet (28) of the cutting unit (2) when the units (2, 3) are properly positioned. Portions of the outside surfaces (21, 31) of the units (2, 3) may have complementary shapes and/or the outside surface (21) of one of the units (2, 3) may be provided with a recessed portion for facing or contacting a portion of the outside surface (31) of another of the units (2, 3).

## Description

### FIELD OF THE INVENTION

The present invention relates to an appliance for preparing foodstuff.

### BACKGROUND OF THE INVENTION

In the field of preparing foodstuff, many appliances are available which are intended to facilitate processes involved with cooking. For example, a person who wants to prepare a soup and who needs to cut vegetables does not necessarily need to use a knife and a chopping board, but may use an appliance which is designed for the purpose of automatically performing a cutting function, wherein the person needs to do nothing more than supplying the vegetables whole or in large bits to the appliance, putting a bowl or the like in place for receiving the cut vegetables from the appliance, and activating the appliance. In many cases, an appliance as mentioned is equipped with a rotatably arranged knife, which may come in the form of a cutting disc having a pattern of openings and sharp cutting edges at the openings, more or less like a grater. Various cutting discs may be used with one appliance, so that it is possible to vary the size and shape of the cut ingredients.

There is a need for an appliance for preparing foodstuff which is easy to use, wherein only a minimum of effort is required from a user in order to achieve a desired cooking result. In particular, there is a need for an appliance which is capable of performing the functions of cutting ingredients, heating ingredients and stirring ingredients at the same time. With such an appliance, a user can prepare any dish by only supplying the correct ingredients at the correct time and choosing appropriate settings for the cutting process, the heating process, and probably also the stirring process. Furthermore, it is advantageous for such an appliance to be compact and easy to clean, and to be designed such as to allow a user to monitor the various aspects of a cooking process at a simple glance.

### SUMMARY OF THE INVENTION

It is an object of the present invention to provide an appliance by means of which it is possible to meet the above-mentioned needs, and by means of which it is possible to achieve perfect cooking results on the basis of an optimum combination of a heating and stirring process on the one hand and a cutting process on the other hand. This object is achieved by means of an appliance for preparing foodstuff, comprising a cutting unit equipped with means for cutting food ingredients and a cooking unit equipped with means for heating food ingredients and means for stirring food ingredients, wherein the cutting unit has at least one outlet for letting out cut food ingredients, and wherein the units are designed to be positioned in a side-by-side configuration in which the cooking unit is in a position for receiving cut food ingredients from the outlet of the cutting unit.

The appliance according to the present invention comprises two units, namely a cutting unit for cutting food ingredients and a cooking unit for heating and stirring food ingredients. The units are designed to be positioned in a side-by-side configuration in which the cooking unit is in a position for receiving cut ingredients from an outlet of the cutting unit. By having the two units as mentioned, it is possible to realize an ongoing heating/boiling process of food ingredients as well as a supply of food ingredients at exactly the right time required by the recipe of the dish to be cooked. A user of the appliance according to the present invention only needs to put the units in the correct mutual position on a suitable base such as a kitchen worktop, choose appropriate settings for cutting, heating, and probably also stirring, supply food ingredients which do not require cutting, such as cooking oil or a liquid, directly to the cooking unit at appropriate times and in appropriate quantities, and supply food items to be cut to the cutting unit at appropriate times and in appropriate quantities, so that these food items will eventually be supplied to the cooking unit in the cut form as desired. During a process of preparing food, it is possible to remove the cutting unit every time this unit does not need to be used, but it is also possible to keep the cutting unit in place with respect to the cooking unit, which is more convenient to a user.

A side-by-side configuration is a configuration in which items are placed alongside each other, generally speaking, which is different from a configuration in which one item is placed on top of another. In a side-by-side configuration, it is possible for longitudinal axes of the items to extend more or less parallel. By choosing a side-by-side configuration of the units instead of a configuration in which the cutting unit is positioned on top of the cooking unit, it is achieved that a user of the appliance according to the present invention can easily monitor both a cutting process taking place in the cutting unit and a heating/stirring process taking place in the cooking unit. In this respect, it is noted that it is advantageous for both units to be provided with transparent top covers. Furthermore, the user can easily monitor a supply of cut food ingredients from the cutting unit to the cooking unit as well.

Cutting units are known per se, as has already been mentioned in the foregoing. However, the known cutting units do not form part of an appliance which further comprises a cooking unit which is adapted to perform at least two functions, namely heating and stirring food ingredients. Hence, the state of the art does not teach if it is possible to adapt the designs and the functionalities of the cutting unit and the cooking unit to each other, and does not provide any clues as to how this should be done.

Preferably, in the appliance according to the present invention, portions of the outside surfaces of the units have complementary shapes, wherein the side-by-side configuration of the units involves contact between the units through the portions of the outside surfaces of the units as mentioned. It is advantageous if contact between the units takes place through actual portions of the outside surfaces of the units, as in this way, unhygienic situations caused by food ingredients falling into one or more gaps which may otherwise be present between the units can be avoided. In general, the appearance of an abutting configuration of units is more appealing than the appearance of a spaced configuration of units. Also, due to the presence of the contact portions of the outside surfaces of the units, it is more or less dictated how the units should be oriented with respect to each other. In this way, correct mutual positioning of the units can be ensured, wherein the outlet of the cutting unit is aimed at the cooking unit. For sake of completeness, it is noted that it is not necessary for the appliance to comprise means for interconnecting the units, as each of the units can be designed such as to be capable of standing independently.

According to a practical option, the contact portion of the outside surface of one of the units may have a concave shape, and the contact portion of the outside surface of another of the units may have a convex shape. With these particular shapes, a smooth appearance of the outside surfaces of the units is obtained, which enhances cleanability and which contributes to an appreciation of the appearance of the appliance by users.

Preferably, the cutting unit is the one unit having the concave outside surface portion. In particular, the design of the appliance can be such that the cutting unit has a larger height than the cooking unit, wherein an actual cutting tool can be present in the portion of the cutting unit rising above the cooking unit, wherein the outlet of the cutting unit can be associated with that portion, and wherein the concave outside surface portion is present in the portion of the cutting unit extending alongside the cooking unit in the side-by-side configuration. In that way, it is achieved that shapes of functional areas of both the cutting unit and the cooking unit, i.e. areas where the actual cutting process and the actual heating and stirring process, respectively, take place, do not need to meet any requirements relating to the concave outside surface portion. Hence, the desire to have a concave outside surface portion does not need to involve restrictions of the functions of the appliance.

It is furthermore possible for the outside surface of one of the units to have a recessed portion which is designed for facing the outside surface of another of the units in the side-by-side configuration. This allows for a compact arrangement of the two units, wherein the outside surfaces of the units can be positioned close to each other at the position of the recessed portion of the one unit, or can be put in contact with each other.

The recessed portion of the outside surface of the one unit may have a shape which is complementary with a shape of the portion of the outside surface of the other unit faced by the recessed portion in the side-by-side configuration of the units. In such a case, a very compact appearance of the appliance according to the present invention can be realized, as portions of the outside surfaces of the units can actually be put in contact with each other.

According to a practical option, the recessed portion of the outside surface of the one unit may have a concave shape, and the portion of the outside surface of the other unit faced by the recessed portion in the side-by-side configuration of the units may have a convex shape. Furthermore, it is possible for the units to have a cross-section which is generally circular, wherein, in the side-by-side configuration of the units, the circle shapes partially overlap at the position of the recessed portion of the outside surface of the one unit. In other words, due to the presence of the recessed outside surface portion, it can be realized that in the side-by-side configuration of the units, a distance between centers of the circular shapes of the cross-sections of the units is smaller than a sum of the radii of the units. A circular shape of the cross-section of both the cutting unit and the cooking unit is very practical in view of the fact that the cutting unit may be adapted to perform the cutting function by means of at least one rotatable cutting blade or a rotatable circular cutting disc defining a cutting area which is shaped like a cylinder having a circular periphery, and the cooking unit may be adapted to perform the stirring function by means of at least one rotatable stirring blade defining a stirring area which is shaped like a cylinder having a circular periphery. Without the recessed outside surface portion, it would not be possibly to realize any overlap, and gaps would be present between the two units.

Preferably, the cutting unit is the unit having the recessed outside surface portion. In particular, the design of the appliance can be such that the cutting unit has a larger height than the cooking unit, wherein an actual cutting tool can be present in the portion of the cutting unit rising above the cooking unit, wherein the outlet of the cutting unit can be associated with that portion, and wherein the recessed outside surface portion is present in the portion of the cutting unit extending alongside the cooking unit in the side-by-side configuration. In that way, it is achieved that shapes of functional areas of both the cutting unit and the cooking unit, i.e. areas where the actual cutting process and the actual heating and stirring process, respectively, take place, do not need to meet any requirements relating to the recessed outside surface portion. Hence, the desire to have a recessed outside surface portion does not need to involve restrictions of the functions of the appliance.

Advantageously, in the cutting unit, the means for cutting food ingredients comprise a cutting tool which is arranged on a rotatable drive shaft, and in the cooking unit, the means for stirring food ingredients comprise a stirring tool which is arranged on a rotatable drive shaft, wherein the drive shafts of the units extend substantially parallel with a maximum deviation of 10° in the side-by-side configuration of the units. In a very practical embodiment of the appliance according to the present invention, both the cutting tool and the stirring tool comprise at least one blade. With the more or less parallel arrangement of the drive shafts of the two tools as mentioned, it is possible for a user to monitor both a cutting process and a cooking process simultaneously, and also to watch the supply of cut food ingredients from the cutting unit to the cooking unit, namely by viewing the appliance from one side, in a direction which is more or less the direction in which the drive shafts extend. Still, within the scope of the present invention, it is possible to have an alternative mutual positioning of the drive shafts, for example in case grinding drums or worm/screw-like tools are used inside the cutting unit.

As has been mentioned in the foregoing, the state of the art does not teach if it is possible to adapt the designs and the functionalities of the cutting unit and the cooking unit to each other, and does not provide any clues as to how this should be done. Options existing within the scope of the present invention for adapting the designs of the cutting unit and the cooking unit to each other involve the above-described options of providing portions of the outside surfaces of the units with specific shapes. An option for adapting the functionalities of the units to each other will be elucidated in the following.

In order to ensure optimal operation of the appliance according to the present invention, it is important that the cutting process performed in the cutting unit and the stirring process performed in the cooking unit are geared to each other. According to insights which have been developed in the context of the present invention, the cutting process should not be too slow in relation to the stirring process, as a relatively slow cutting process may cause a cooking condition of food ingredients in the cooking unit to vary to an unacceptable extent, namely when a considerable amount of time passes between the start and the end of a supply of those cooking ingredients from the cutting unit to the cooking unit. On the other hand, the cutting process should not be too fast in relation to the stirring process, as a relatively fast cutting process may cause splashing to take place inside the cooking unit, and may also cause bad distribution of food ingredients inside the cooking unit and a sudden drop of temperature at the position where freshly cut food ingredients accumulate. Another disadvantage of a relatively fast cutting process, which leads to a relatively fast supply of cut food ingredients to the cooking unit, is that the appliance may seem to be out of control to a user, at least from time to time.

Furthermore, in view of the fact that appliances for performing cutting actions on food ingredients exist in the market, it is realistic to assume that users of the appliance according to the present invention expect a certain speed range when it comes to the performance of the cutting unit. Also, when the stirring action performed by the cooking unit is considered independently from the cutting action performed by the cutting unit, requirements as to the speed at which the stirring action is performed are applicable. In particular, the speed may not be too high in order to avoid splashing effects, and the speed may not be too low in order to avoid scorching of the food ingredients inside the cooking unit.

Another complicating factor in gearing the cutting process and the stirring process to each other is the fact that the type of food ingredients supplied by a user to the cutting unit to be cut can vary enormously. For example, the food ingredients may range from delicate herbs to solid bits of hard vegetables. In all these cases, the appliance according to the present invention should realize a good cutting process, a good supply of cut food ingredients from the cutting unit to the cooking unit, and a good cooking process, resulting in a well-cooked dish.

All in all, there are many factors and effects related to the cutting speed and the stirring speed, wherein the cutting speed and the stirring speed can be considered both as dependent quantities and as independent quantities. In particular, a quantity for defining a relationship between the processes taking place in the units during operation of the appliance cannot readily be found. Nevertheless, in the context of the present invention, a relevant quantity is defined for each of the units, so that it is possible to have an advantageous range of values for the ratio of the quantities of the units. To be more specific, it is proposed to use a capacity of the tools of the units to transport mass as the relevant quantity.

Within the context of the present invention, it has been found that a ratio of the capacity of the stirring tool to transport mass and the capacity of the cutting tool to transport mass, which will hereinafter be referred to as capacity ratio, can be in a large range, namely from about 0.000001 to about 6,000. In order to have a useful definition, it is proposed to use a logarithmic scale for the capacity ratio. It is all the more logical to do so in view of the fact that such type of scale is often used in relation to subjective sensation, combined with the fact that when it comes to defining a well-balanced functioning of the two units of the appliance according to the present invention, the perception of a user is one of the important factors which need to be taken into account. On the logarithmic scale, the capacity ratio ranges from about -6 to about 4. However, it has been found that a performance of the appliance according to the present invention which can be denoted as being optimal when all of the various factors as described in the foregoing are taken into account is associated with a range of the capacity ratio from -3 to -1 on the logarithmic scale.

According to the present invention, a practical range of the capacity ratio is a range of 0.023 to 0.033. This range is calculated on the basis of particulars of a practical embodiment of the appliance according to the present invention, by means of which it is possible to meet all the requirements and realize wonderful cooking results. The particulars are listed in the following.

The cutting unit of the practical embodiment has two rotatable cutting blades defining a ring-shaped cutting area, wherein an outside diameter D of the cutting blades is 150 mm, a diameter d of a hub supporting the cutting blades is 42 mm, and an average height H of the cutting blades is 12.5 mm. The volume V of the ring-shaped cutting area is found by using the following formula: V_{cutting area} = (D² * π * H / 4) - (d² * π * H / 4) = 203575.204 mm³. A practical value of the angular speed n of the cutting blades is in a range of 500 to 600 rpm. The capacity Q of the cutting unit to transport mass is determined on the basis of the following formula: Q_{cutting unit} = V_{cutting area} / 60 * n = 1696460.033 to 2035752.040 mm³/sec.

The cooking unit of the practical embodiment has one rotatable stirring blade defining a ring-shaped stirring area, wherein an outside diameter D of the stirring blade is 224 mm, a diameter d of a hub supporting the stirring blade is 50 mm, and an average height H of the stirring blade is 15 mm. The volume V of the ring-shaped stirring area is found by using the following formula: V_{stirring area} = (D² * π * H / 4) - (d² * π * H / 4) = 561669.6426 mm³. A practical value of the angular speed n of the stirring blade is in a range of 5 to 6 rpm. The capacity Q of the cooking unit to transport mass is determined on the basis of the following formula: Q_{cooking unit} = V_{stirring area} / 60 * n = 46805.80355 to 56166.96426 mm³/sec.

The lowest value of the range of the capacity ratio is the outcome of 46805.80355 / 2035752.040 = 0.023. The highest value of the range of the capacity ratio is the outcome of 56166.96426/1696460.033 = 0.033.

It follows from the values of the angular speed of the cutting blades and the stirring blade mentioned in the foregoing that a ratio of the angular speed of the drive shaft of the cutting unit and the angular speed of the drive shaft of the cooking unit is in an order of 100. For sake of completeness, it is noted that with this ratio, a good cooking process and good cooking results are ensured, as is the case with the above-described range of the capacity ratio.

In a practical embodiment of the appliance according to the present invention, the cooking unit has an open side and a removable lid for covering the open side, which are at a lower level than the outlet of the cutting unit in the side-by-side configuration of the units. In such an embodiment, there is no need for additional means for transporting cut food ingredients from the cutting unit to the cooking unit, as the necessary transport is automatically realized under the influence of gravity. Furthermore, it is advantageous for the lid for covering the open side of the cooking unit to be easily removable with no obstacles in the way, whether the cutting unit is in place beside the cooking unit, or not. Preferably, the lid is made of a transparent material, so that a user of the appliance is not hindered by the lid in a process of monitoring a cooking process which is going on in the cooking unit.

Besides the outlet, the cutting unit further comprises an inlet for receiving food ingredients to be cut. It is practical if, in the side-by-side configuration of the units, only the outlet of the cutting unit is at a position directly above the cooking unit. An advantage of the inlet not being at such a position as well is that a user is allowed to supply food ingredients to be cut from the side of the cooking unit, and not from above the cooking unit, which is more convenient to a user, and which allows a user to watch most of the cooking unit without hindrance of portions of the cutting unit.

All in all, the present invention provides an appliance for preparing foodstuff which is capable of performing the functions of cutting, heating and stirring at the same time. The appliance comprises two units which are adapted to be arranged in a side-by-side configuration, wherein one of the units is a cutting unit which is equipped with means for performing the cutting function, and wherein another of the units is a cooking unit which is equipped with means for performing the heating function and the stirring function. In the side-by-side configuration of the units, the cooking unit is positioned such as to receive cut food ingredients from the cutting unit. According to a first aspect of the present invention, portions of the outside surfaces of the units have complementary shapes, so that the units can be arranged in an abutting fashion. According to a second aspect of the present invention, the outside surface of a unit has a recessed portion, so that it is possible to place the units against each other in order to obtain a compact whole. According to a third aspect of the present invention, the cutting unit comprises a suitable tool for performing a cutting function, and the cooking unit comprises a suitable tool for performing a stirring function, wherein the logarithm of a ratio of a capacity of the stirring tool to transport mass and a capacity of the cutting tool to transport mass is in a range of -3 to -1. In this way, proper functioning of the appliance is guaranteed, and good cooking results can be expected, wherein phenomena like splashing and scorching are prevented from occurring, and wherein considerable temperature differences in the cooking unit are avoided, to mention some of the important advantages of this aspect. According to a fourth aspect of the present invention, drive shafts which are part of the units extend substantially parallel with a maximum deviation of 10° in the side-by-side configuration of the units. Hence, assuming a horizontal base for supporting the units, a practical orientation of the drive shafts is an orientation which is more or less vertical, which allows for easy inspection of the tools arranged on the drive shafts, during operation of the appliance.

The present invention also relates to a cutting unit for use with a cooking unit in an appliance for preparing foodstuff, wherein the cutting unit is equipped with means for cutting food ingredients and has at least one outlet for letting out cut food ingredients, and wherein the cutting unit is designed to be positioned in a side-by-side configuration with respect to the cooking unit, in which the outlet is in a position for supplying cut food ingredients to the cooking unit. In the context of the present invention, as has been explained in the foregoing, the cooking unit is a unit which is equipped with means for heating food ingredients and means for stirring food ingredients.

Preferably, a portion of the outside surface of the cutting unit according to the present invention has a concave shape. It is furthermore possible for the outside surface of the cutting unit to have a recessed portion which is designed for facing a portion of the outside surface of the cooking unit in the side-by-side configuration of the cutting unit with respect to the cooking unit, wherein it is noted that the recessed portion may have the concave shape as mentioned.

The above-described and other aspects of the present invention will be apparent from and elucidated with reference to the following detailed description of an appliance for preparing foodstuff, comprising a cutting unit equipped with means for cutting food ingredients and a cooking unit equipped with means for heating food ingredients and means for stirring food ingredients, wherein the units are designed to be positioned in a side-by-side configuration.

### BRIEF DESCRIPTION OF THE DRAWINGS

The present invention will now be explained in greater detail with reference to the figures, in which equal or similar parts are indicated by the same reference signs, and in which:
Figure 1 shows a perspective view of an appliance for preparing foodstuff according to the present invention;
Figure 2 shows a side view of the appliance for preparing foodstuff according to the present invention;
Figure 3 shows a top view of the appliance for preparing foodstuff according to the present invention;
Figure 4 shows a sectional view of the appliance for preparing foodstuff according to the present invention;
Figure 5 shows a perspective view of a cutting unit which is part of the appliance according to the present invention;
Figure 6 shows a perspective view of a cooking unit which is part of the appliance according to the present invention, provided with a lid for closing an open side of the cooking unit;
Figure 7 illustrates how shapes of outside surfaces of the units which are part of the appliance of the present invention are adapted to each other;
Figure 8 shows a perspective view of a cutting tool which is part of the cutting unit of the appliance according to the present invention;
Figure 9 shows a top view of the cutting tool which is part of the cutting unit of the appliance according to the present invention;
Figure 10 shows a side view of a stirring tool which is part of the cooking unit of the appliance according to the present invention; and
Figure 11 shows a top view of the stirring tool which is part of the cooking unit of the appliance according to the present invention.

### DETAILED DESCRIPTION OF EMBODIMENTS

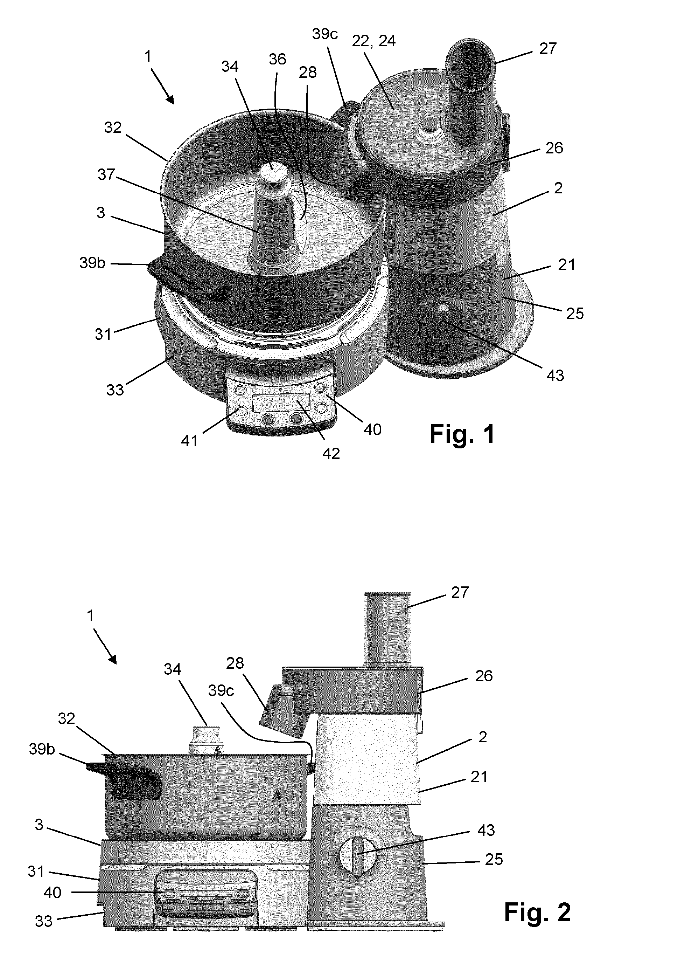

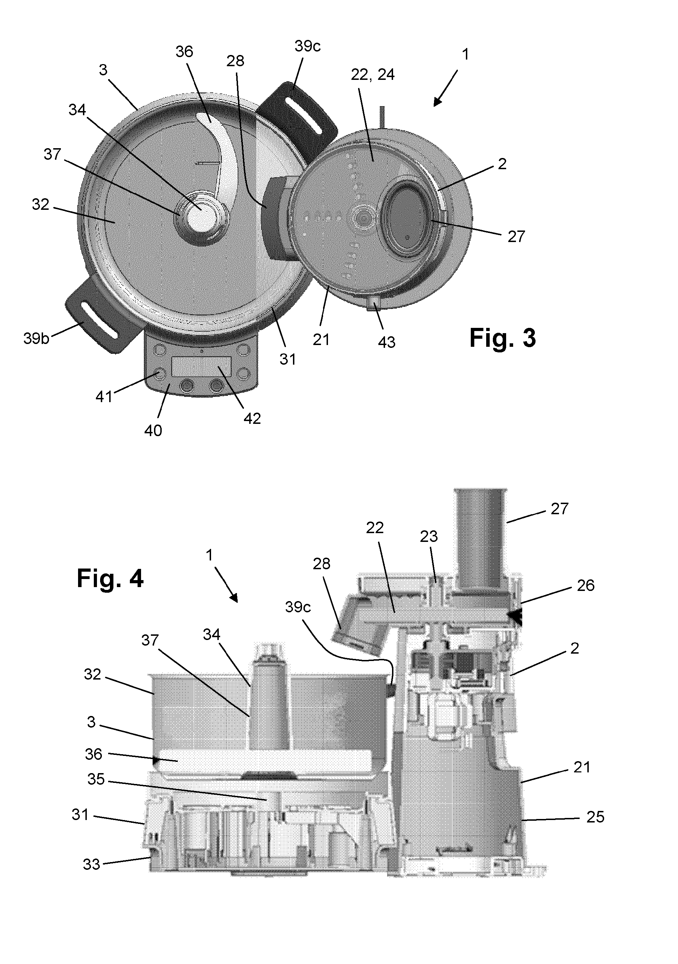

Figures 1-4 show an appliance 1 for preparing foodstuff according to the present invention. In the following, the appliance 1 will be denoted as food cooker 1.

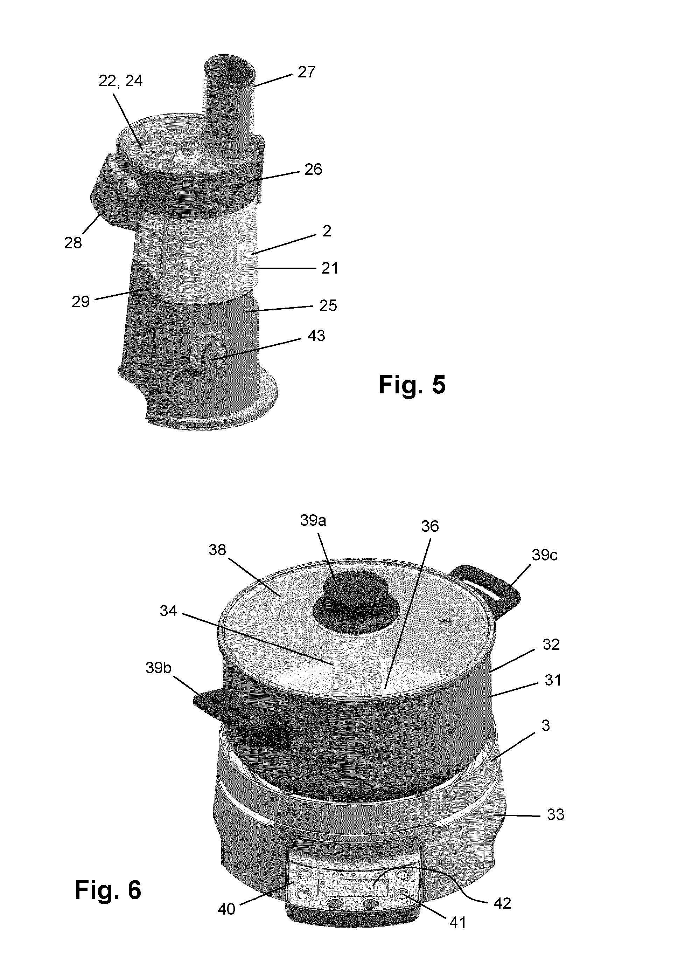

Figures 1-4 clearly illustrate the fact that the food cooker 1 comprises two units 2, 3 which are arranged in a side-by-side configuration in order to have an operative mode of the food cooker 1. One of the units 2, 3 is adapted to be used for cutting food ingredients such as vegetables, and will hereinafter be referred to as cutting unit 2, whereas another of the units 2, 3 is adapted to be used for simultaneously heating and stirring food ingredients, and will hereinafter be referred to as cooking unit 3. In the embodiment of the food cooker 1 as shown, the units 2, 3 are arranged in an abutting fashion in the operative mode of the food cooker 1, wherein a portion of the outside surface 21 of the cutting unit 2 and a portion of the outside surface 31 of the cooking unit 3 contact each other. It is not essential for the units 2, 3 to contact each other; in particular, it is also possible for portions of the outside surfaces 21, 31 to extend at a close distance with respect to each other. For sake of completeness, it is noted that figures 1, 2 and 4 illustrate a normal orientation of the food cooker 1. Furthermore, it is noted that figure 5 provides an illustration of only the cutting unit 2, whereas figure 6 provides an illustration of only the cooking unit 3.

The cutting unit 2 comprises a cutting tool 22 and a drive shaft 23 for rotating the cutting tool 22. In the shown example, the drive shaft 23 has a substantially vertical orientation in a normal orientation of the cutting unit 2. The cutting tool 22 may comprise any item that is capable of cutting food ingredients when rotated. Figures 1, 3 and 5 illustrate the option of having a cutting disc 24, i.e. a circular disc having a pattern of openings and sharp edges at the openings. A set of various cutting discs 24 may be provided, so that a user may choose the most appropriate cutting disc 24 dependent on specific cutting requirements for specific types of food ingredients. Another option is a cutting tool 22 comprising at least one cutting blade as will be further explained later.

In the shown example, the cutting unit 2 comprises a base 25, which is at least as high as the cooking unit 3, and a top cover 26 which serves for covering the base 25 at the top, and which is removably arranged with respect to the base 25. Preferably, at least a portion of the top cover 26 is transparent, so that a user of the food cooker 1 is allowed to look inside the cutting unit 2 when the top cover 26 is in place on the base 25, and is thereby capable of monitoring cutting processes. The base 25 accommodates means such as an electric motor for driving the drive shaft 23. The drive shaft 23 projects from the top of the base 25 and is designed for supporting the cutting tool 22 near its free end, as a result of which it is possible for the cutting tool 22 to be positioned at the level of the top cover 26. The top cover 26 has an inlet tube 27 for letting in food ingredients to be supplied by a user and an outlet tube 28 for letting out food ingredients to the cooking unit 3. The inlet tube 27 projects from the top cover 26 in an upward direction, whereas the outlet tube 28 projects from the top cover 26 in a downward direction. Advantageously, the inlet tube 27 and the outlet tube 28 are positioned such as to be diametrically opposed, as is the case with the shown example. In this way, assuming a correct position of the cutting unit 2 with respect to the cooking unit 3, in which the outlet tube 28 is above the cooking unit 3, it is achieved that a user can supply food ingredients to the cutting unit 2 from a position which is beside the cooking unit 3. In this way, among other things, a good level of user safety is guaranteed, as a situation in which a user needs to put his/her hand above the cooking unit 3 when supplying food ingredients is avoided, so that there is no risk of injuries due to burning.

When the cutting unit 2 is activated, the cutting tool 22 is rotated by means of the drive shaft 23. As the drive shaft 23 has a substantially vertical orientation in the shown embodiment of the food cooker 1, the cutting tool 22 rotates in a substantially horizontal plane. Food ingredients supplied by a user to the cutting unit 2 through the inlet tube 27 are cut in small pieces by the rotating cutting tool 22. The cut food ingredients are transported through the top cover 26 until they reach the outlet tube 28 where they exit the cutting unit 2 and fall down to the cooking unit 3. Preferably, the top cover 26 is equipped with means which are adapted to influence the transport of the cut food ingredients in such a way that the process of cut food ingredients entering the outlet tube 28 can take place in a proper manner without disturbing the cutting process, especially without resulting in an accumulation of cut food ingredients at some position inside the top cover 26.

The cooking unit 3 comprises a pan 32 and a base 33 for supporting the pan 32. Furthermore, the cooking unit 3 comprises a stirring tool 34 for stirring food ingredients inside the pan 32, and a drive shaft 35 for rotating the stirring tool 34. The base 33 accommodates means such as an electric motor for driving the drive shaft 35, and also means such as an electric coil for supplying heat to the pan 32. The stirring tool 34 may comprise any item that is capable of stirring food ingredients when rotated. Figure 1, 3 and 6 illustrate the option of having a stirring blade 36 arranged on a hub 37 covering the drive shaft 35. In the shown example, the drive shaft 35 and the hub 37 have a substantially vertical orientation in a normal orientation of the cooking unit 3.

As illustrated in figure 6, a lid 38 can be used with the pan 32 for covering an open side of the pan 32. Preferably, at least a portion of the lid 38 is transparent, so that a user of the food cooker 1 is allowed to look inside the pan 32 when the lid 38 is in place on the pan 32, and is thereby capable of monitoring cooking and stirring processes. Advantageously, the lid 38 is provided with a grip 39a allowing a user of the food cooker 1 to take hold of the lid 38 when the lid 38 needs to be removed from the pan 32 during a supply of cut food ingredients from the cutting unit 2, or needs to be put back in place on the pan 32 for keeping heat inside the pan 32 as much as possible during cooking processes and covering the content of the pan 32. For sake of completeness, it is noted that the pan 32 typically has two grips 39b, 39c arranged in a diametrically opposed position for a user to take hold of.

When the cooking unit 3 is activated, the stirring tool 34 is rotated by means of the drive shaft 35. As the drive shaft 35 has a substantially vertical orientation in the shown embodiment of the food cooker 1, the stirring tool 34 rotates in a substantially horizontal plane. Furthermore, the means for heating the pan 32 are activated. Hence, food ingredients which are present in the pan 32 are heated, and the food ingredients are stirred at the same time in order to promote an even distribution of the food ingredients in the pan 32 and to prevent the food ingredients from scorching to the bottom of the pan 32.

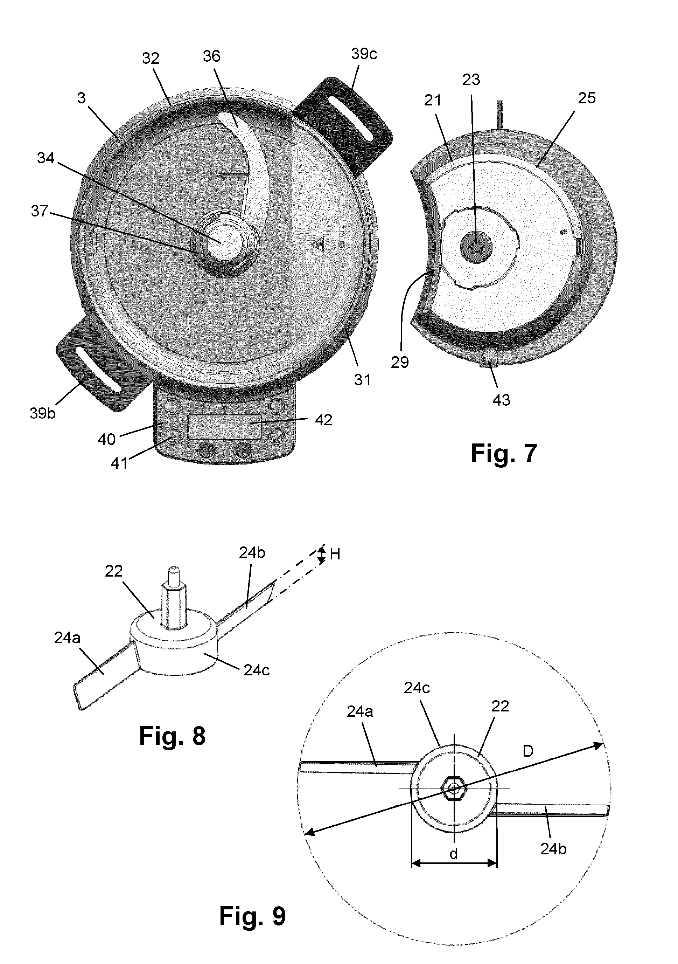

A notable feature of the food cooker 1 is the fact that the outside surface 21 of the cutting unit 2 has a recessed portion 29 at the base 25. The cutting unit 2 has a generally circular circumference, which is interrupted at the position of the recessed portion 29. The outside surface 21 of the cutting unit 2 has a generally convex appearance, but is concave at the position of the recessed portion 29. The outside surface 31 of the cooking unit 3 has a generally convex appearance. Figure 7 illustrates the fact that as a result, it is possible to let the units 2, 3 slide into each other, as it were, wherein a very compact appearance of the food cooker 1 is obtained in view of the fact that a distance between centers of the circular shapes of the cross-sections of the units 2, 3 is smaller than a sum of the radii of the units 2, 3. In particular, figure 7 shows a top view of the cooking unit 3 and the base 25 of the cutting unit 2, wherein the cooking unit 3 and the base 25 of the cutting unit 2 are positioned at a small distance with respect to each other, with the recessed portion 29 of the base 25 of the cutting unit 2 facing the cooking unit 3. The shape of the recessed portion 29 of the outside surface 21 of the cutting unit 2 may be such as to be capable of exactly following the shape of the portion of the outside surface 31 of the cooking unit 3 faced by the recessed portion 29 in the operative, side-by-side configuration of the units 2, 3, so that it is possible for the units 2, 3 to contact each other over a substantial part of their outside surfaces 21, 31.

The food cooker 1 is very much suitable to be used for preparing soup. In the following, the functioning of the food cooker 1 will be explained in the context of a process for preparing vegetable soup. In the first place, a user of the food cooker 1 ensures that the units 2, 3 of the food cooker 1 are put in place with respect to each other, wherein the units 2, 3 are positioned in a side-by-side configuration on a table or a kitchen worktop, for example, and wherein the pan 32 of the cooking unit 3 is capable of receiving cut food ingredients from the outlet tube 28 of the cutting unit 2. Naturally, in order to have a proper functioning of the food cooker 1, it is important for the units 2, 3 to be assembled in the right way. In the cutting unit 2, the cutting tool 22 should be connected to the drive shaft 23, and the top cover 26 should be put in place on top of the base 25. In the cooking unit 3, the stirring tool 34 should be connected to the drive shaft 35, and the pan 32 should be put in place on top of the base 33.

The actual process of making the soup is very simple when the food cooker 1 is used. The user fills the pan 32 directly with stock and activates both the heating function and the stirring function of the cooking unit 3. In order to have an effective heating process, the user applies the lid 38 for closing the pan 32 and thereby keeping the heat inside the pan 32 as much as possible during the times that there is no need for the pan 32 to be open. The user supplies the vegetables which need cutting to the pan 32 through the cutting unit 2, wherein the user takes care of the supply in one round, or in more rounds, for example, when both delicate vegetables and hard vegetables are used and different cooking times are applicable. The user activates the cutting function of the cutting unit 2 and puts the vegetables in the inlet tube 27 of the top cover 26. In the process, the user can watch the cutting process, the supply of cut vegetables from the cutting unit 2 to the cooking unit 3, the stirring process and the cooking process at the same time. In this respect, it is noted that, assuming a substantially parallel arrangement of the drive shafts 23, 35 of the cutting tool 22 and the stirring tool 34, respectively, the plane in which the cutting tool 22 rotates has the same orientation as the meniscus of the soup.

In fact, when the food cooker 1 is applied, all that the user needs to do is to take care of a supply of food ingredients at the right time(s), and furthermore to take care of a proper operation of the food cooker 1, so that the food cooker 1 can do the rest and can perform a process of preparing food according to input set by the user. Throughout the process, there is no need to remove the cutting unit 2, as the food cooker 1 is designed such that the presence of the cutting unit 2 next to the cooking unit 3 does not hinder the user in removing the lid 38 from the pan 32 and putting the lid 38 back on the pan 32. In particular, a distance between a free end of the outlet tube 28 of the cutting unit 2 and the open side of the pan 32 is large enough for the necessary handling of the lid 38. Furthermore, the presence of the cutting unit 2 next to the cooking unit 3 does not limit the user's view on the pan 32 to an unacceptable extent.

At the end of the cooking process, the user takes care that the food cooker 1 is deactivated. In this respect, it is noted that the food cooker 1 can comprise a timer or the like for automatically determining when the foodstuff is ready, depending on input provided by the user. Other functionalities are possible as well when it comes to the cooking process. For example, the food cooker 1 can comprise a microcontroller which is arranged in the base 33 of the cooking unit 3, wherein the cooking unit 3 can have one or more knobs or the like by means of which the user can provide input to the microcontroller, and a display for showing information to the user. The base 33 of the cooking unit 3 can also be equipped with means for weighing the content of the pan 32, for example. In such a case, it is possible for the food cooker 1 to automatically determine the time that is needed for completing a cooking process. For sake of completeness, it is noted that a control panel 40 of the cooking unit 3 having knobs 41 and a display 42 can be seen in figures 1-3, 6 and 7. Furthermore, it is noted that the cutting unit 2 can have a knob 43 or the like as well for allowing a user to control the cutting unit 2, as can be seen in figures 1, 3 and 5.

For the purpose of cleaning the cooking unit 3 after use, the user can remove the stirring tool 34 from the pan 32, and can take the pan 32 from the base 33. As far as the cutting unit 2 is concerned, the user can remove the top cover 26 from the base 25, and can also remove the cutting tool 22. All in all, there are not many components which require cleaning, and the process of cleaning can be performed in a relatively quick and easy manner.

In order to guarantee functioning of the food cooker 1 in a way that is acceptable to a user and does not leave doubt as to effectiveness and reliability, and that ensures excellent cooking results, it is important that the cutting process performed in the cutting unit and the stirring process performed in the cooking unit are geared to each other, wherein there is a need for a definition which can be used to express the extent of this gearing. According to an insight underlying the present invention, it is possible to define a ratio of the capacity of the stirring tool 34 to transport mass and the capacity of the cutting tool 22 to transport mass in order to meet this need, i.e. the capacity ratio as mentioned earlier, wherein it is proposed to use a logarithmic scale.

The capacity ratio is found by using the following formula: i = Q_{cooking unit} / Q_{cutting unit}, wherein i represents the capacity ratio, Q_{cooking unit} represents the capacity of the cooking unit 3 to transport mass, and Q_{cutting unit} represents the capacity of the cutting unit 2 to transport mass.

The capacity of the cutting unit 2 to transport mass is found by using the following formula: Q_{cutting unit} = V_{cutting} area / 60 * n, wherein V_{cutting} area represents the volume of the cutting area, i.e. the area covered by the rotatably arranged cutting tool 22, and n represents the angular speed of the cutting tool 22.

The volume of the cutting area is found by using the following formula: V_{cutting} area = (D² * π * H / 4) - (d² * π * H / 4), wherein D represents an outside diameter of the cutting tool 22, H represents an average height of the cutting tool 22, and d represents a diameter of a centrally positioned support of the cutting tool 22.

The various values of the dimensioning of the cutting tool 22 are indicated in figures 8 and 9, in which a cutting tool 22 having two cutting blades 24a, 24b and a hub 24c is shown. In figure 9, a circular circumference of the cutting area is indicated by means of a dash-and-dot line.

The capacity of the cooking unit 3 to transport mass is found by using the following formula: Q_{cooking unit} = V_{stirring area} / 60 * n, wherein V_{stirring area} represents the volume of the stirring area, i.e. the area covered by the rotatably arranged stirring tool 34, and n represents the angular speed of the stirring tool 34.

The volume of the stirring area is found by using the following formula: V_{stirring area} = (D² * π* H / 4) - (d² * π * H / 4), wherein D represents an outside diameter of the stirring tool 34, H represents an average height of the stirring tool 34, and d represents a diameter of a centrally positioned support of the stirring tool 34, which is formed by the hub 37 in this case.

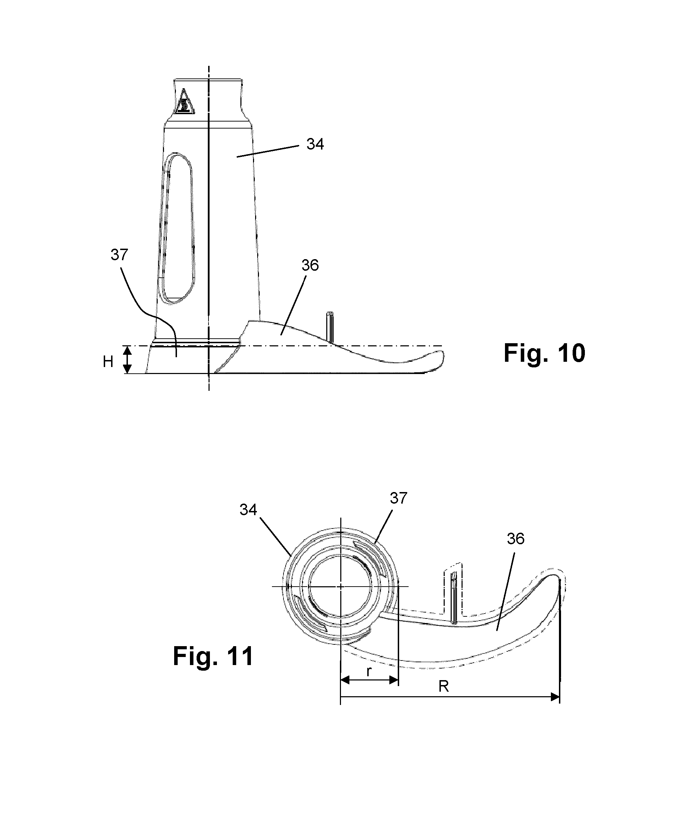

The average height H of the stirring tool 34 is indicated in figure 10, in which the stirring tool 34 as described earlier is shown, namely the stirring tool 34 having the one stirring blade 36. This stirring tool 34 is also shown in figure 11, wherein an outside radius of the stirring tool 34 is indicated as R, and wherein a radius of the hub 37 is indicated as r. The outside diameter D of the stirring tool 34 equals two times the outside radius R of the stirring tool 34, and the diameter d of the hub 37 equals two times the radius r of the hub 37.

As has been explained earlier, it is preferred for the logarithm of the capacity ratio to be in a range from -3 to -1. Furthermore, a practical range of the capacity ratio is a range from 0.023 to 0.033. With the capacity ratio in the first range, and possibly also in the second range, it is ensured that a user gets a good impression from the functioning of the food cooker 1 under all possible circumstances, wherein a good cooking result is achieved due to minimization or even total prevention of disturbing effects like uneven distribution of food ingredients in the pan 32, splashing of food ingredients in the pan 32, and scorching of food ingredients in the pan 32.

It will be clear to a person skilled in the art that the scope of the present invention is not limited to the examples discussed in the foregoing, but that several amendments and modifications thereof are possible without deviating from the scope of the present invention as defined in the attached claims. While the present invention has been illustrated and described in detail in the figures and the description, such illustration and description are to be considered illustrative or exemplary only, and not restrictive. The present invention is not limited to the disclosed embodiments.

Variations to the disclosed embodiments can be understood and effected by a person skilled in the art in practicing the claimed invention, from a study of the figures, the description and the attached claims. In the claims, the word "comprising" does not exclude other steps or elements, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the present invention.

It is noted that it is possible for the appliance 1 according to the present invention to comprise a single housing in which both the cutting unit 2 and the cooking unit 3 are incorporated, typically a housing with a combined base for supporting both the top cover 26 of the cutting unit 2 and the pan 32 of the cooking unit 3. In such an embodiment of the appliance 1, the cutting unit 2 may be arranged such as to offer a user of the appliance 1 an option of tilting or turning the cutting unit 2, or at least the outlet tube 28 of the cutting unit 2, away from the cooking unit 3.

The cooking unit 3 may comprise any suitable means for stirring food ingredients inside the pan 32, i.e. causing agitation/movement of the food ingredients, whereby, on the one hand, burning of the food ingredients is avoided and, on the other hand, an even distribution of the food ingredients in the pan 32 is obtained. In case the means for stirring food comprise a movably arranged tool 34, the movement of the tool 34 can be any type of movement, for example, a continuous movement or a jerky movement. In case the movement is a rotating movement, the movement can be in one direction, or can be a reciprocating movement, for example.

The present invention can be summarized as follows. An appliance 1 for preparing foodstuff comprises two units 2, 3 which are designed to be positioned in an operative, side-by-side configuration. A first unit is a cutting unit 2 equipped with means 22, 24 for cutting food ingredients, and a second unit is a cooking unit 3 equipped with means for heating food ingredients and means 34 for stirring food ingredients. The cutting unit 2 has at least one outlet 28 for letting out cut food ingredients, and the cooking unit 3 is in a position for receiving cut food ingredients from the outlet 28 of the cutting unit 2 when the units 2, 3 are put in the intended mutual position.

According to a first preferred option, portions of the outside surfaces 21, 31 of the units 2, 3 have complementary shapes, so that it is possible to have a contact area between the units 2, 3 in the side-by-side configuration, and to realize an appearance of the appliance 1 without gaps. A practical overall shape for both units 2, 3 is a cylindrical shape with a circular circumference, and without adjustment of a portion of the outside surface 21, 31 of at least one of the units 2, 3, it would only be possible to have contact between the units 2, 3 along a single line.

Alternatively or additionally, the outside surface 21 of one of the units 2, 3 is provided with a recessed portion 29 for facing or contacting a portion of the outside surface 31 of another of the units 2, 3, thereby providing a possibility of having a very compact appearance of the appliance 1 according to the present invention.

According to another preferred option, a drive shaft 23 for driving a cutting tool 22 of the cutting unit 2 and a drive shaft 35 for driving a stirring tool 34 of the cooking unit 3 extend substantially parallel with a maximum deviation of 10° in the side-by-side configuration of the units 2, 3. In this way, it is possible to provide a user with a possibility of visually checking the operation of both the cutting tool 22 and the stirring tool 34.

In order to properly adapt the functioning of the two units 2, 3 of the appliance 1 to each other, it is useful to define a ratio of a capacity of the stirring tool 34 to transport mass and a capacity of the cutting tool 22 to transport mass and to ensure that this ratio is within certain limits. A preferred range of the logarithm of the ratio as mentioned is a range from -3 to -1.

## Claims

1. Appliance (1) for preparing foodstuff, comprising a cutting unit (2) equipped with means (22, 24) for cutting food ingredients and a cooking unit (3) equipped with means for heating food ingredients and means (34) for stirring food ingredients, wherein the cutting unit (2) has at least one outlet (28) for letting out cut food ingredients, and wherein the units (2, 3) are designed to be positioned in a side-by-side configuration in which the cooking unit (3) is in a position for receiving cut food ingredients from the outlet (28) of the cutting unit (2).

2. Appliance (1) according to claim 1, wherein portions of the outside surfaces (21, 31) of the units (2, 3) have complementary shapes, and wherein the side-by-side configuration of the units (2, 3) involves contact between the units (2, 3) through the portions of the outside surfaces (21, 31) of the units (2, 3) as mentioned.

3. Appliance (1) according to claim 2, wherein the portion of the outside surface (21, 31) of one of the units (2, 3) has a concave shape, and wherein the portion of the outside surface (21, 31) of another of the units (2, 3) has a convex shape.

4. Appliance (1) according to claim 1, wherein the outside surface (21, 31) of one of the units (2, 3) has a recessed portion which is designed for facing a portion of the outside surface (21, 31) of another of the units (2, 3) in the side-by-side configuration of the units (2, 3).

5. Appliance (1) according to claim 4, wherein the recessed portion (29) of the outside surface (21) of the one unit (2) has a shape which is complementary with a shape of the portion of the outside surface (31) of the other unit (3) faced by the recessed portion (29) in the side-by-side configuration of the units (2, 3).

6. Appliance (1) according to claim 4, wherein the recessed portion (29) of the outside surface (21) of the one unit (2) has a concave shape, and wherein the portion of the outside surface (31) of the other unit (3) faced by the recessed portion (29) in the side-by-side configuration of the units (2, 3) has a convex shape.

7. Appliance (1) according to claim 4, wherein both units (2, 3) have a cross-section which is generally circular, and wherein, in the side-by-side configuration of the units (2, 3), the circle shapes partially overlap at the position of the recessed portion (29) of the outside surface (21) of the one unit (2).

8. Appliance (1) according to claim 1, wherein, in the cutting unit (2), the means for cutting food ingredients comprise a cutting tool (22, 24) which is arranged on a rotatable drive shaft (23), wherein, in the cooking unit (3), the means for stirring food ingredients comprise a stirring tool (34) which is arranged on a rotatable drive shaft (35), and wherein the drive shafts (23, 35) of the units (2, 3) extend substantially parallel with a maximum deviation of 10° in the side-by-side configuration of the units (2, 3).

9. Appliance (1) according to claim 1, wherein, in the cutting unit (2), the means for cutting food ingredients comprise a cutting tool (22, 24) which is arranged on a rotatable drive shaft (23), wherein, in the cooking unit (3), the means for stirring food ingredients comprise a stirring tool (34) which is arranged on a rotatable drive shaft (35), and wherein the logarithm of a ratio of a capacity of the stirring tool (34) to transport mass and a capacity of the cutting tool (22, 24) to transport mass is in a range of -3 to -1.

10. Appliance (1) according to claim 1, wherein, in the cutting unit (2), the means for cutting food ingredients comprise a cutting tool (22, 24) which is arranged on a rotatable drive shaft (23), wherein, in the cooking unit (3), the means for stirring food ingredients comprise a stirring tool (34) which is arranged on a rotatable drive shaft (35), and wherein a ratio of a capacity of the stirring tool (34) to transport mass and a capacity of the cutting tool (22, 24) to transport mass is in a range of 0.023 to 0.033.

11. Appliance (1) according to claim 1, wherein, in the cutting unit (2), the means for cutting food ingredients comprise a cutting tool (22, 24) which is arranged on a rotatable drive shaft (23), wherein, in the cooking unit (3), the means for stirring food ingredients comprise a stirring tool (34) which is arranged on a rotatable drive shaft (35), wherein the appliance (1) is adapted to drive the drive shaft (23) of the cutting unit (2) and the drive shaft (35) of the cooking unit (3) at different angular speeds, and wherein a ratio of the angular speed of the drive shaft (23) of the cutting unit (2) and the angular speed of the drive shaft (35) of the cooking unit (3) is in an order of 100.

12. Appliance (1) according to claim 1, wherein, besides the outlet (28), the cutting unit (2) further comprises an inlet (27) for receiving food ingredients to be cut, and wherein, in the side-by-side configuration of the units (2, 3), only the outlet (28) of the cutting unit (2) is at a position directly above the cooking unit (3).

13. Cutting unit (2) for use with a cooking unit (3) in an appliance (1) for preparing foodstuff, wherein the cutting unit (2) is equipped with means (22, 24) for cutting food ingredients and has at least one outlet (28) for letting out cut food ingredients, and wherein the cutting unit (2) is designed to be positioned in a side-by-side configuration with respect to the cooking unit (3), in which the outlet (28) is in a position for supplying cut food ingredients to the cooking unit (3).

14. Cutting unit (2) according to claim 13, wherein a portion (29) of the outside surface (21) of the cutting unit (2) has a concave shape.

15. Cutting unit (2) according to claim 13, wherein the outside surface (21) of the cutting unit (2) has a recessed portion (29) which is designed for facing a portion of the outside surface (31) of the cooking unit (3) in the side-by-side configuration of the cutting unit (2) with respect to the cooking unit (3).

## Amended claims

### Amended claims in accordance with Rule 137(2) EPC.

**1.** Appliance (1) for preparing foodstuff, comprising
- a cutting unit (2) equipped with means (22, 24) for cutting food ingredients, and
- a cooking unit (3) equipped with means for heating food ingredients and means (34) for stirring food ingredients,
wherein the cutting unit (2) comprises a base (25) with a cutting tool (22) and a drive shaft (23) for rotating the cutting tool (22), wherein the base (25) accommodates means for driving the drive shaft (23),
wherein the cooking unit (3) comprises a base (33) supporting a pan (32), with a stirring tool (34) for stirring food ingredients inside the pan (32), and a drive shaft (35) for rotating the stirring tool (34), wherein the base (33) accommodates means for driving the drive shaft (35), and also means for supplying heat to the pan (32),
wherein the cutting unit (2) has at least one outlet (28) for letting out cut food ingredients, and wherein the units (2, 3) are designed to be positioned in a side-by-side configuration in which the cooking unit (3) is in a position for receiving cut food ingredients from the outlet (28) of the cutting unit (2),
wherein each of the units is capable of standing independently, and wherein the units (2, 3) can slide into each other,
wherein an outside surface (21, 31) of one of the units (2, 3) has a recessed portion which is designed for facing a portion of an outside surface (21, 31) of another of the units (2, 3) in the side-by-side configuration of the units (2, 3), and
wherein both units (2, 3) have a cross-section which is generally circular, and wherein, in the side-by-side configuration of the units (2, 3), the circle shapes partially overlap at the position of the recessed portion (29) of the outside surface (21) of the one unit (2).

**2.** Appliance (1) according to claim 1, wherein portions of the outside surfaces (21, 31) of the units (2, 3) have complementary shapes, and wherein the side-by-side configuration of the units (2, 3) involves contact between the units (2, 3) through the portions of the outside surfaces (21, 31) of the units (2, 3) as mentioned.

**3.** Appliance (1) according to claim 2, wherein the portion of the outside surface (21, 31) of one of the units (2, 3) has a concave shape, and wherein the portion of the outside surface (21, 31) of another of the units (2, 3) has a convex shape.

**4.** Appliance (1) according to claim 1, wherein the recessed portion (29) of the outside surface (21) of the one unit (2) has a shape which is complementary with a shape of the portion of the outside surface (31) of the other unit (3) faced by the recessed portion (29) in the side-by-side configuration of the units (2, 3).

**5.** Appliance (1) according to claim 1, wherein the recessed portion (29) of the outside surface (21) of the one unit (2) has a concave shape, and wherein the portion of the outside surface (31) of the other unit (3) faced by the recessed portion (29) in the side-by-side configuration of the units (2, 3) has a convex shape.

**6.** Appliance (1) according to claim 1, wherein, in the cutting unit (2), the means for cutting food ingredients comprise a cutting tool (22, 24) which is arranged on a rotatable drive shaft (23), wherein, in the cooking unit (3), the means for stirring food ingredients comprise a stirring tool (34) which is arranged on a rotatable drive shaft (35), and wherein the drive shafts (23, 35) of the units (2, 3) extend substantially parallel with a maximum deviation of 10° in the side-by-side configuration of the units (2, 3).

**7.** Appliance (1) according to claim 1, wherein, in the cutting unit (2), the means for cutting food ingredients comprise a cutting tool (22, 24) which is arranged on a rotatable drive shaft (23), wherein, in the cooking unit (3), the means for stirring food ingredients comprise a stirring tool (34) which is arranged on a rotatable drive shaft (35), and wherein the logarithm of a ratio of a capacity of the stirring tool (34) to transport mass and a capacity of the cutting tool (22, 24) to transport mass is in a range of -3 to -1.

**8.** Appliance (1) according to claim 1, wherein, in the cutting unit (2), the means for cutting food ingredients comprise a cutting tool (22, 24) which is arranged on a rotatable drive shaft (23), wherein, in the cooking unit (3), the means for stirring food ingredients comprise a stirring tool (34) which is arranged on a rotatable drive shaft (35), and wherein a ratio of a capacity of the stirring tool (34) to transport mass and a capacity of the cutting tool (22, 24) to transport mass is in a range of 0.023 to 0.033.

**9.** Appliance (1) according to claim 1, wherein, in the cutting unit (2), the means for cutting food ingredients comprise a cutting tool (22, 24) which is arranged on a rotatable drive shaft (23), wherein, in the cooking unit (3), the means for stirring food ingredients comprise a stirring tool (34) which is arranged on a rotatable drive shaft (35), wherein the appliance (1) is adapted to drive the drive shaft (23) of the cutting unit (2) and the drive shaft (35) of the cooking unit (3) at different angular speeds, and wherein a ratio of the angular speed of the drive shaft (23) of the cutting unit (2) and the angular speed of the drive shaft (35) of the cooking unit (3) is in an order of 100.

**10.** Appliance (1) according to claim 1, wherein, besides the outlet (28), the cutting unit (2) further comprises an inlet (27) for receiving food ingredients to be cut, and wherein, in the side-by-side configuration of the units (2, 3), only the outlet (28) of the cutting unit (2) is at a position directly above the cooking unit (3).

**11.** Cutting unit (2) for use with a cooking unit (3) in an appliance (1) for preparing foodstuff, wherein the cutting unit (2) is equipped with means (22, 24) for cutting food ingredients and has at least one outlet (28) for letting out cut food ingredients, and wherein the cutting unit (2) is designed to be positioned in a side-by-side configuration with respect to a cooking unit (3), in which the outlet (28) is in a position for supplying cut food ingredients to a cooking unit (3);
wherein an outside surface (21) of the cutting unit (2) has a recessed portion which is designed for facing a portion of an outside surface (31) of a cooking unit in the side-by-side configuration of the units (2, 3), and
wherein the cutting unit (2) has a cross-section which is generally circular, and wherein the circle shape partially overlaps with the recessed portion (29) of the outside surface (21) of the cutting unit (2).

**12.** Cutting unit (2) according to claim 11, wherein a portion (29) of the outside surface (21) of the cutting unit (2) has a concave shape.
